# EUROPEAN PATENT SPECIFICATION

(11) **EP 3 876 213 B1**
(45) Date of publication and mention of the grant of the patent: **01.11.2023**
(21) Application number: 21183679.6
(22) Date of filing: 05.07.2021
(51) Int. Cl.: G08G 1/01, G08G 1/017, G08G 1/04, G08G 1/054, G06V 20/13, G06V 20/17, G06V 20/10, G06V 20/56, G08G 5/00

(54) **TRAFFIC MONITORING METHOD, APPARATUS, DEVICE AND STORAGE MEDIUM**
VERKEHRSÜBERWACHUNGSVERFAHREN, -GERÄT, -VORRICHTUNG UND -SPEICHERMEDIUM
PROCÉDÉ DE SURVEILLANCE DE TRAFIC, APPAREIL, DISPOSITIF ET SUPPORT D'ENREGISTREMENT

(30) Priority: 26.10.2020 CN 202011157702
(43) Date of publication of application: 08.09.2021
(73) Proprietor: Beijing Baidu Netcom Science Technology Co., Ltd., Beijing 100085 (CN)
(72) Inventor: WANG, Yuan, Beijing (CN); ZHAO, Jin, Beijing (CN); SU, Xing, Beijing (CN); DENG, Shewei, Beijing (CN); YANG, Xiang, Beijing (CN); ZHOU, Hao, Beijing (CN); YAN, Jing, Beijing (CN); QIN, Shenglin, Beijing (CN); CONG, Xiaoliang, Beijing (CN); ZHANG, Yaling, Beijing (CN)
(74) Representative: Studio Torta S.p.A.

(56) References cited:
- WO-A1-2019/095588
- US-A1- 2014 088 855
- US-A1- 2018 247 537
- US-A1- 2018 365 995
- US-A1- 2018 374 347
- US-A1- 2019 156 676
- US-A1- 2019 197 889
- US-A1- 2019 322 367

## Description

### TECHNICAL FIELD

The present application relates to data processing technology, in particular to a traffic monitoring method, an apparatus, a device, and a storage medium, which may be used in fields of autonomous driving, intelligent transportation, and big data.

### BACKGROUND

In order to ensure efficiency and safety of urban traffic, it is necessary to monitor a state of the urban traffic.

Currently, the following two manners are mainly used to monitor the state of the urban traffic. Manner 1: collecting data by deploying a camera at a roadside and an intersection, and manually reviewing the collected data thereby extracting a traffic event. Manner 2: regularly arranging a patrol officer to conduct manual inspection, thereby finding a traffic event.

However, the above two manners are inefficient in monitoring the state of the urban traffic.

US 2019/197889 A1 discloses an information collection system enables crackdown on traffic violations by vehicles to be carried out in a preferable manner. The information collection system includes an autonomous mobile object. Specifically, the autonomous mobile object includes a driving information acquirer that acquires driving information relating to the state of driving of a nearby vehicle, an image acquirer that captures an image of the environment of the autonomous mobile object, a detector that detects a traffic violation by a nearby vehicle based on the driving information, and a controller that sends violation information relating to a traffic violation to the server apparatus. When a traffic violation is detected by the detector, the controller sends a captured image relating to the violator's vehicle and the driving information about the violator's vehicle, to the server apparatus as the violation information.

US 2019/322367 A1 discloses a method of controlling an unmanned aerial road side unit (ARSU) drone. The drone may obtain data in the uncovered zone. For example, the drone may be equipped with a camera and may provide pictures or a video feed to the control center to provide traffic information in the uncovered zone, or the video information may be captured by a camera on the vehicle and may be relayed by the drone to the control center; or, the drone may establish wireless communication with one or more vehicles in the uncovered zone below the drone and may receive non-video information indicative of traffic conditions, such as vehicle speed, location, and direction of travel. And then, the traffic conditions in the current uncovered zone may be evaluated based on the data provided by the drone, which may include determining whether a vehicle accident is detected or whether excessive or unexpected traffic congestion is present.

US 2019/156676 A1 and WO 2019/095588 A1 disclose further methods for monitoring road traffic.

### SUMMARY

The invention is set out in the appended set of claims. The present application provides a traffic monitoring method, an apparatus and a storage medium, which are used to improve the monitoring efficiency of the traffic state.

In a first aspect, the present application provides a traffic monitoring method, including:
acquiring road condition information and/or vehicle state information collected by a terminal device, where the terminal device is at least one of an unmanned vehicle and an unmanned aerial vehicle; and
performing a data analysis on the road condition information and/or the vehicle state information, and identifying a traffic event.

In a second aspect, the present application provides a traffic monitoring apparatus, including:
a first acquiring module, configured to acquire road condition information and/or vehicle state information collected by a terminal device, where the terminal device is at least one of an unmanned vehicle and an unmanned aerial vehicle; and
an identifying module, configured to perform a data analysis on the road condition information and/or the vehicle state information, and identify a traffic event.

In a third aspect, the present application provides an electronic device, including:
at least one processor; and
a memory communicatively connected with the at least one processor; where,
the memory stores an instruction executable by the at least one processor, the instruction is executed by the at least one processor, to enable the at least one processor to execute the method according to any one of the first aspect.

In a fourth aspect, the present application provides a non-transitory computer-readable storage medium storing a computer instruction for causing a computer to execute the method according to any one of the first aspect.

In a fifth aspect, the present application provides a computer program product including a computer program that, when executed by a processor, causing the processor to execute the method according to any one of the first aspect.

The traffic monitoring method, the apparatus, the device and the storage medium provided by the present application collect road condition information and/or vehicle state information by utilizing a terminal device, and perform a data analysis on the collected road condition information and/or vehicle state information, identify a traffic event, thereby realizing monitoring of the traffic state, making it possible to improve the monitoring efficiency of the traffic state, and reducing labor costs. Further, the terminal device used to collect data in the present application is an unmanned vehicle and/or an unmanned aerial vehicle, because the unmanned vehicle and/or the unmanned aerial vehicle may move flexibly, more comprehensive traffic state information may be collected, thereby making it possible to monitor the traffic state comprehensively and flexibly.

It should be understood that content described in this section is neither intended to identify a key or important feature of embodiments of the present application, nor to limit the scope of the present application. Other features of the present application will become easy to understand through the following description.

### BRIEF DESCRIPTION OF DRAWINGS

Drawings are used to better understand the present solution, and do not constitute a limitation to the present application. Among them:
FIG. 1 is a schematic diagram of a traffic monitoring system provided by the present application;
FIG. 2 is a flowchart of a traffic monitoring method provided by the present application;
FIG. 3 is a flowchart of another traffic monitoring method provided by the present application;
FIG. 4 is a flowchart of yet another traffic monitoring method provided by the present application;
FIG. 5 is a flowchart of yet another traffic monitoring method provided by the present application;
FIG. 6 is a flowchart of yet another traffic monitoring method provided by the present application;
FIG. 7 is a block diagram of a software structure of a traffic monitoring device provided by the present application;
FIG. 8 is a structural schematic diagram of a traffic monitoring apparatus provided by the present application;
FIG. 9 is a structural schematic diagram of another traffic monitoring apparatus provided by the present application; and
FIG. 10 is a structural schematic diagram of an electronic device provided by the present application.

### DESCRIPTION OF EMBODIMENTS

Exemplary embodiments of the present application are illustrated below with reference to the drawings, where various details of the embodiments of the present application are included to facilitate understanding, and they should be regarded as merely exemplary. Therefore, those of ordinary skill in the art should realize that various changes and modifications may be made to the embodiments described herein without departing from the scope of the present application. Likewise, for clarity and conciseness, descriptions of well-known functions and structures are omitted in the following description.

Currently, the following two manners are mainly used to monitor a state of an urban traffic. Manner 1: collecting data by deploying a camera at a roadside and an intersection, and manually reviewing the collected data to extract a traffic event. Manner 2: regularly arranging a patrol officer to conduct manual inspection, thereby finding a traffic event.

However, in the above two manners, because of manual reviewing or collecting the traffic event, the monitoring of the state of the urban traffic is inefficient and the labor costs are high; in addition, in Manner 1, a location of the camera is fixed and merely part areas may be monitored, in Manner 2, the patrol officer is unable to conduct inspection at all times, therefore, neither of the above two manners may monitor the state of the urban traffic comprehensively and flexibly.

In order to solve at least one of the above technical problems, the present application provides a traffic monitoring method, an apparatus, a device, and a storage medium, which are applied in fields of autonomous driving, intelligent transportation, big data and so on.

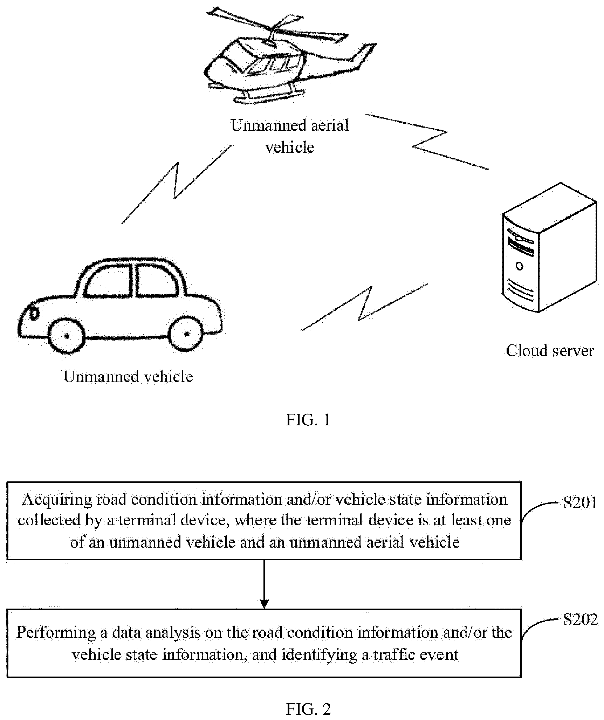

Firstly, a system architecture involved in the present application is described with reference to FIG. 1. FIG. 1 is a schematic diagram of a traffic monitoring system provided by the present application. As shown in FIG. 1, the system may include an unmanned vehicle, an unmanned aerial vehicle and a cloud server.

The unmanned vehicle may be equipped with a sensor such as a camera, a radar and so on, the unmanned vehicle may collect traffic state information through the sensor during driving. The unmanned aerial vehicle may also be equipped with a camera, the unmanned aerial vehicle may collect traffic state information through the camera during flying. The unmanned vehicle and the unmanned aerial vehicle in this embodiment may be used to monitor the state of the urban traffic, that is, the unmanned vehicle and the unmanned aerial vehicle are used as traffic inspection devices.

In an embodiment of the present application, the traffic state information may include road condition information and/or vehicle state information.

In some examples, the unmanned vehicle and the unmanned aerial vehicle may communicate with each other directly. The unmanned aerial vehicle may collect the traffic state information under control of the unmanned vehicle. For example, when the unmanned vehicle cannot collect the traffic state information of a certain target location, the unmanned vehicle controls the unmanned aerial vehicle to fly into the air to collect the traffic state information of the target location.

In some examples, the unmanned vehicle and the unmanned aerial vehicle do not communicate with each other directly. Both the unmanned vehicle and the unmanned aerial vehicle communicate with the cloud server. The unmanned aerial vehicle may collect the traffic state information under control of the cloud server. For example, when the cloud server needs to acquire the traffic state information of a certain target location, the cloud server controls the unmanned aerial vehicle to fly into the air to collect the traffic state information of the target location.

In some possible implementations, the unmanned vehicle is provided with a parking location for the unmanned aerial vehicle to park. For example, the parking location may be provided at a roof or other locations of the unmanned vehicle. When the unmanned aerial vehicle is idle, it parks at the parking location. When the unmanned aerial vehicle needs to collect traffic state information, it may take off from the parking location and fly into the air to collect the traffic state information. After the collection is completed, the unmanned aerial vehicle may also return to the parking location. By providing the parking location of the unmanned aerial vehicle on the unmanned vehicle, it is convenient for the unmanned aerial vehicle to take off and park.

The traffic monitoring method provided by the present application may be executed by an unmanned vehicle or a cloud server. In the present application, by utilizing a terminal device to collect traffic state information, performing a data analysis on the collected traffic state information, and identifying a traffic event, thereby the monitoring of the traffic state is realized, monitoring efficiency of the traffic state may be improved, and labor costs are reduced. Further, the terminal device used to collect data in the present application is an unmanned vehicle and/or an unmanned aerial vehicle, because the unmanned vehicle and/or the unmanned aerial vehicle may move flexibly, more comprehensive traffic state information may be collected, thereby making it possible to monitor the traffic state comprehensively and flexibly.

The technical solution of the present application is described in detail below in conjunction with several specific embodiments. The following specific embodiments may be combined with each other, same or similar concepts or procedures may not be repeated in some embodiments.

FIG. 2 is a flowchart of a traffic monitoring method provided by the present application. As shown in FIG. 2, the method of this embodiment may include:
S201: acquiring road condition information and/or vehicle state information collected by a terminal device, where the terminal device is at least one of an unmanned vehicle and an unmanned aerial vehicle.

An execution subject of the method of this embodiment may be a traffic monitoring device. The traffic monitoring device may be the unmanned vehicle in FIG. 1, or an electronic device integrated in the unmanned vehicle. The traffic monitoring device may also be the cloud server in FIG. 1, or an electronic device integrated in the cloud server.

Among them, the road condition information refers to information used to indicate a road condition, the road condition includes, but is not limited to: a condition of a road surface facility (such as a traffic light, a road marking line, an isolation belt, etc.), a condition of a road surface passage (such as whether it is crowded, whether it is fenced, etc.) and so on.

Optionally, the road condition information may include one or more of the following: a road surface image collected by the unmanned vehicle, a road surface image collected by the unmanned aerial vehicle, and road surface facility data collected by a sensor of the unmanned vehicle.

The vehicle state information refers to information used to indicate a state of a vehicle on the road. Among them, the state of the vehicle may include a driving state and a parking state. For example, information of the driving state of the vehicle may include a driving speed, a driving trajectory, and so on. For example, information of the parking state of the vehicle may include a parking location, a parking duration, and so on.

Optionally, the vehicle state information may include one or more of the following: a vehicle image collected by the unmanned vehicle, a vehicle image collected by the unmanned aerial vehicle, and a vehicle state parameter collected by a sensor of the unmanned vehicle.

It should be noted that the road surface image, the vehicle image, and so on, described in this embodiment of the present application, may be one or more images discretely shot, or may be multiple frames of images (i.e., a video) continuously shot.

In this embodiment, the unmanned vehicle and/or the unmanned aerial vehicle are used to collect the road condition information and/or the vehicle state information, because the unmanned vehicle and/or the unmanned aerial vehicle may move flexibly, thereby comparing with a collection by a camera at a roadside or a manual collection by a patrol officer, the road condition information and/or the vehicle state information collected in this embodiment are more comprehensive.

S202: performing a data analysis on the road condition information and/or the vehicle state information, and identifying a traffic event.

The traffic event in the present application may include one or more of the following: a vehicle violation event, a road surface traffic event, a target vehicle on road event, and so on. Among them, the vehicle violation event includes, but is not limited to a violation driving event (for example, speeding, running a red light, failing to wear a seat belt, etc.), a parking violation event, a road thrown object event, and so on. The road surface traffic event includes, but is not limited to a road surface traffic accident event, a road surface facility fault event, and so on. The target vehicle on road event includes, but is not limited to a blacklisted vehicle on road, an unlicensed vehicle on road, and so on.

In this embodiment, the traffic event may be identified by performing a data analysis on the road condition information; or, the traffic event may be identified by performing a data analysis on the vehicle state information; or, the traffic event may be identified by performing a data analysis on the road condition information and the vehicle state information.

It should be noted that in the solution of the present application, by performing a data analysis on the road condition information and/or the vehicle state information, one or more traffic events occurring in a current traffic scenario may be identified.

Among them, the procedure of performing a data analysis on the road condition information and/or the vehicle state information may include: a vehicle plate identification, a driving behavior identification (for example, whether a driver is making a phone call, whether a driver is wearing a seat belt, whether a driver is running a red light, etc.), a thrown object identification, identification of a state of a road surface facility, and so on. And then, the traffic event is identified based on the above analysis result.

The traffic monitoring method provided in this embodiment uses a terminal device to collect road condition information and/or vehicle state information, performs a data analysis on the collected road condition information and/or vehicle state information, and identifies a traffic event, thereby realizing monitoring of a traffic state, making it possible to improve monitoring efficiency of the traffic state, and reducing labor costs. Further, the terminal device used to collect data in the present application is an unmanned vehicle and/or an unmanned aerial vehicle, because the unmanned vehicle and/or the unmanned aerial vehicle may move flexibly, more comprehensive traffic state information may be collected, thereby making it possible to monitor the traffic state comprehensively and flexibly.

On the basis of any of the above embodiments, the traffic monitoring method provided by the present application are described in more detail below in conjunction with several types of traffic events.

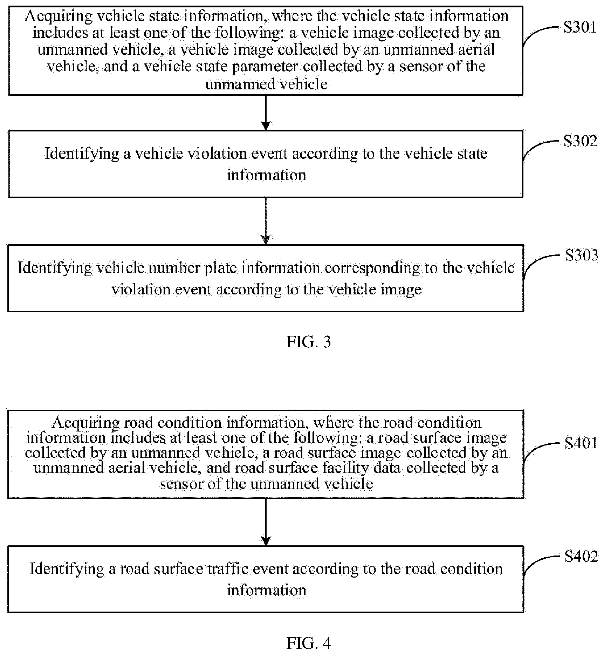

FIG. 3 is a flowchart of another traffic monitoring method provided by the present application. This embodiment describes an identification procedure of a vehicle violation event. As shown in FIG. 3, the method of this embodiment includes:
S301: acquiring vehicle state information, where the vehicle state information includes at least one of the following: a vehicle image collected by an unmanned vehicle, a vehicle image collected by an unmanned aerial vehicle, and a vehicle state parameter collected by a sensor of the unmanned vehicle.
S302: identifying a vehicle violation event according to the vehicle state information.

Specifically, an identification rule corresponding to the vehicle violation event may be determined according to a road traffic safety law, an implementation regulation of the road traffic safety law and other regulatory requirements. For example, the identification rule corresponding to the vehicle violation event may include one or more of the following: a driver making a phone call, a driver failing to wear a seat belt, a vehicle driving through a red-lighted intersection, a speed of a vehicle being higher than a preset value, and so on. Furthermore, the vehicle state information may be detected and analyzed according to the above identification rules, thereby a vehicle violation event is identified. For example, when the state information of a certain vehicle satisfies any of the above identification rules, it is determined that the vehicle is a violation vehicle, thereby a vehicle violation event is identified.

Exemplarily, a driving behavior identification is performed on the vehicle image collected by the unmanned aerial vehicle and/or the vehicle image collected by the unmanned vehicle, when it is identified that a driver of a certain vehicle fails to wear a seat belt, it is determined that the driver is in violation driving, thereby a vehicle violation event is identified.

Exemplarily, a driving behavior identification is performed on the vehicle image collected by the unmanned aerial vehicle and/or the vehicle image collected by the unmanned vehicle, when it is identified that a driver of a certain vehicle is making a phone call, it is determined that the driver is in violation driving, thereby a vehicle violation event is identified.

Exemplarily, a thrown object identification is performed on the vehicle image collected by the unmanned aerial vehicle and/or the unmanned vehicle, when it is identified that a thrown object is falling from a certain vehicle, a vehicle violation event is identified.

In some application scenarios, it is also possible to perform a data analysis on the above vehicle state information in conjunction with map data, thereby identifying a vehicle violation event.

Optionally, S302 may specifically include: acquiring map data from a map server, where the map data includes road section restriction information on a vehicle; identifying the vehicle violation event according to the road section restriction information on the vehicle and the vehicle state information.

Among them, the road section restriction information on the vehicle includes, but is not limited to speed restriction information of each road section, prohibition information of each road section, bus lane information of each road section, information of a no parking area, and so on, that are marked on a high-precision map.

Exemplarily, a parking location of a vehicle is determined based on the vehicle state information collected by the unmanned vehicle and/or the unmanned aerial vehicle, and then it is determined that whether the vehicle is parking in a no parking area by matching the parking location with the no parking area marked on the high-precision map. If yes, it is determined that the vehicle is in violation parking, thereby a vehicle violation event is identified.

Exemplarily, a driving speed of a vehicle is determined based on the vehicle state information collected by the unmanned vehicle and/or the unmanned aerial vehicle, and then it is determined that whether the driving speed is higher than a speed restriction information by comparing the driving speed with the speed restriction information of a corresponding road section marked on the high-precision map. If yes, it is determined that the vehicle is speeding, thereby a vehicle violation event is identified.

Optionally, in this embodiment, after identifying the vehicle violation event, it is possible to continue to execute S303.

S303: identifying vehicle number plate information corresponding to the vehicle violation event according to the vehicle image.

In this embodiment, after identifying the vehicle violation event, number plate information of the violation vehicle may be further identified according to the vehicle image, to facilitate subsequently process of the vehicle.

FIG. 4 is a flowchart of yet another traffic monitoring method provided by the present application. This embodiment describes an identification procedure of a road surface traffic event. As shown in FIG. 4, the method of this embodiment includes:
S401: acquiring road condition information, where the road condition information includes at least one of the following: a road surface image collected by an unmanned vehicle, a road surface image collected by an unmanned aerial vehicle, and road surface facility data collected by a sensor of the unmanned vehicle.
S402: identifying a road surface traffic event according to the road condition information.

Among them, the road surface traffic event includes: a road surface traffic accident event, and/or a road surface facility fault event. The following describes identification procedures of the road surface traffic accident event and the road surface facility fault event.
(1) Identifying a road surface traffic accident event based on the road condition information.

Among them, the road surface traffic accident event refers to an event in which a vehicle on the road causes personal injury or death or property damage due to fault or accident.

In this embodiment, characteristics of various traffic accidents may be obtained according to historical data statistics, the characteristics are, for example, a relative location between two or more vehicles that have a traffic accident, a relative location between a vehicle that has a traffic accident and a fixed facility, and so on. Furthermore, identification rules corresponding to various traffic accidents are determined according to the characteristics of the various traffic accidents.

Furthermore, the road condition information may be identified and analyzed according to the above identification rules, thereby a road surface traffic accident event is identified. For example, if a relative location between a vehicle A and a vehicle B satisfies a certain condition, it is determined that a traffic accident has occurred between the vehicle A and the vehicle B. Or, if a relative location between a vehicle C and a road isolation belt satisfies a certain condition, it is determined that the vehicle C has a traffic accident.

Optionally, after a road surface traffic accident event is identified, it may further include: identifying vehicle number plate information corresponding to the traffic accident according to the road surface image.

Optionally, after a road surface traffic accident event is identified, it may further include: acquiring a responsibility determination result corresponding to the traffic accident, and notifying the vehicle corresponding to the traffic accident of the responsibility determination result. Exemplarily, the responsibility determination result may be broadcasted by the unmanned aerial vehicle, in a form of voice, and both vehicles are notified to leave the scene.

Among them, the following two possible implementations may be used to acquire the responsibility determination result corresponding to the traffic accident.

In a possible implementation, the road condition information is analyzed, for example, evidence information is input into a responsibility determination model, and the responsibility determination model analyzes the road condition information, thereby the responsibility determination result corresponding to the traffic accident is determined.

In another possible implementation, the road condition information is sent to a responsibility determination server. The responsibility determination server determines the responsibility for the traffic accident. Then, the responsibility determination result is received from the responsibility determination server.

In the prior art, after a traffic accident occurs, it is necessary to manually report the case and keep the accident scene, wait for a traffic police to the scene to collect accident evidence and determine the accident, which makes processing efficiency of the traffic accident lower and easy to cause traffic congestion. Compared with the above prior art, the traffic accident processing procedure of this embodiment improves processing efficiency, avoids traffic congestion.

(2) Identifying a road surface facility fault event according to the road condition information.

Among them, a road surface facility refers to a facility set up to ensure traffic safety or passage efficiency, which includes, but is not limited to a traffic light, a road marking line, a road sign, a pedestrian road span bridge, a road isolation belt, a lighting facility, a sight guidance sign, an emergency contact facility, and so on.

Different traffic facilities have corresponding design specifications. For example, the traffic signal light should include a red light, a green light, a yellow light, and the above signal lights should be lit according to a preset lighting sequence and lighting duration. For another example, a width of the road marking line should be a preset width, when the road marking line is a dashed line, there should be a preset distance between two adjacent marking lines. For yet another example, the road sign should be set at a location of a preset height from a road surface. In this embodiment, a traffic facility that does not satisfy the design specifications is referred to as a fault road surface facility.

Exemplarily, an identification rule corresponding to a fault road surface facility may be determined according to a design specification of a road surface facility. Furthermore, a fault road surface facility may be identified according to the identification rule corresponding to the fault road surface facility. For example, when a state of a road surface facility satisfies any of the above identification rules, it is determined that the road surface facility has a fault, thereby a road surface facility fault event is identified.

Exemplarily, a state of a traffic light is detected according to the road condition information collected by the unmanned aerial vehicle and/or the unmanned vehicle, when a certain traffic light is detected to be normally dim, it is determined that the traffic light is fault, thereby a road surface facility fault event is identified.

Exemplarily, a width of a road marking line is detected according to the road condition information collected by the unmanned aerial vehicle and/or the unmanned vehicle, when it is detected that the width of the marking line does not satisfy a preset range, it is determined that the marking line has a fault, thereby a road surface facility fault event is identified.

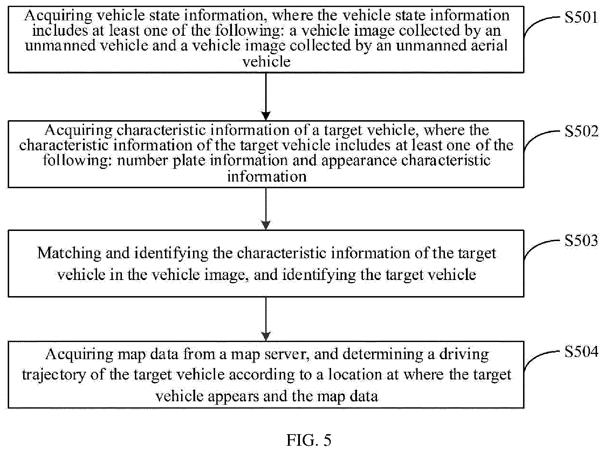

FIG. 5 is a flowchart of yet another traffic monitoring method provided by the present application. This embodiment describes an identification procedure of a target vehicle on road event. As shown in FIG. 5, the method of this embodiment includes:
S501: acquiring vehicle state information, where the vehicle state information includes at least one of the following: a vehicle image collected by an unmanned vehicle and a vehicle image collected by an unmanned aerial vehicle.
S502: acquiring characteristic information of a target vehicle, where the characteristic information of the target vehicle includes at least one of the following: number plate information and appearance characteristic information.

Among them, the target vehicle may be a vehicle that needs to be heavily focused on in different application scenarios. For example, in some specific scenarios, it is necessary to heavily focused on some vehicles with specific number plates. In other specific scenarios, it is necessary to heavily focused on some vehicles with specific appearance characteristics.

S503: matching and identifying the characteristic information of the target vehicle in the vehicle image, and identifying the target vehicle.

Specifically, the number plate and/or appearance characteristic of each vehicle on the road are detected according to the vehicle image collected by the unmanned vehicle and/or the unmanned aerial vehicle, if a number plate of a certain vehicle matches the number plate information of the target vehicle, the vehicle is determined as the target vehicle. Or, if an appearance characteristic of a certain vehicle matches the appearance characteristic information of the target vehicle, the vehicle is determined as the target vehicle. Thus, a target vehicle on road event is identified.

Optionally, after a target vehicle is identified, it is also possible to execute S504.

S504: acquiring map data from a map server, and determining a driving trajectory of the target vehicle according to a location at where the target vehicle appears and the map data.

By determining the driving trajectory of the target vehicle, real time positioning and tracking of the target vehicle may be realized.

In the embodiments shown from FIG. 3 to FIG. 5, by collecting road condition information and/or vehicle state information, performing a data analysis on the collected road condition information and/or vehicle state information, and identifying a traffic event, thereby monitoring of a traffic state is realized, monitoring efficiency of the traffic state may be improved, and labor costs are reduced. Further, by utilizing an unmanned vehicle and/or an unmanned aerial vehicle to collect data, because the unmanned vehicle and/or the unmanned aerial vehicle may move flexibly, more comprehensive traffic state information may be collected, thereby making it possible to monitor the traffic state comprehensively and flexibly.

On the basis of any of the above embodiments, a traffic monitoring procedure is described below in conjunction with the system shown in FIG. 1.

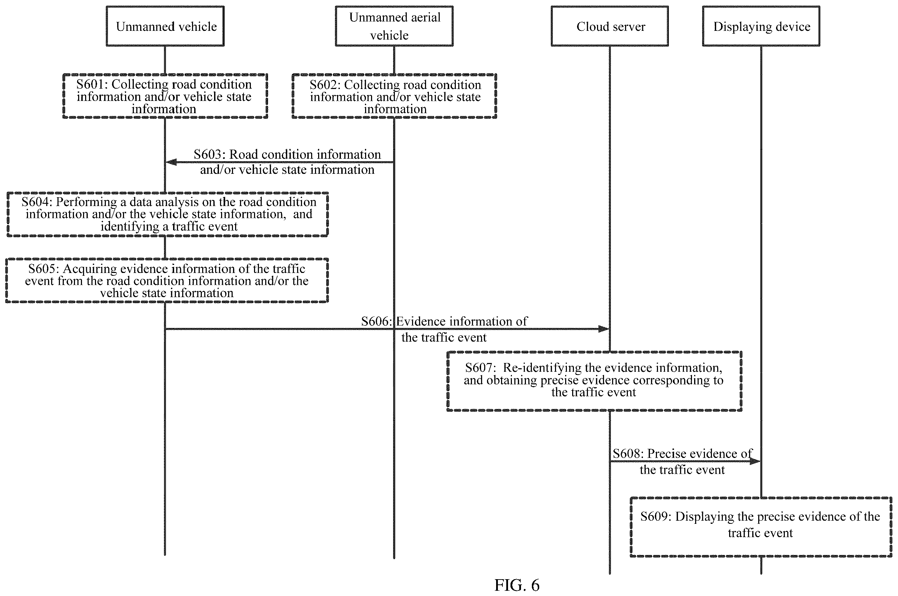

FIG. 6 is a flowchart of yet another traffic monitoring method provided by the present application. As shown in FIG. 6, the method of this embodiment includes:
S601: an unmanned vehicle collects road condition information and/or vehicle state information.
S602: an unmanned aerial vehicle collects road condition information and/or vehicle state information.

Among them, the unmanned aerial vehicle may collect road condition information and/or vehicle state information under control of an unmanned vehicle. The unmanned aerial vehicle may also collect road condition information and/or vehicle state information under control of a cloud server. Of course, the unmanned aerial vehicle may also not be controlled by the unmanned vehicle or the cloud server. This is not limited in this embodiment.

An execution sequence of S601 and 5602 may be executed simultaneously, or may also be executed sequentially, which is not limited in this embodiment.

S603: the unmanned aerial vehicle sends the road condition information and/or the vehicle state information to the unmanned vehicle.

S604: the unmanned vehicle performs a data analysis on the road condition information and/or the vehicle state information, and identifies a traffic event.

Specifically, the unmanned vehicle performs a data analysis on the road condition information and/or the vehicle state information collected by itself, as well as the road condition information and/or the vehicle state information collected by the unmanned aerial vehicle, and identifies a traffic event.

It should be understood that for specific implementation of S604, reference may be made to the detailed description of the above embodiments, details will not be repeated herein.

S605: the unmanned vehicle acquires evidence information of the traffic event from the road condition information and/or the vehicle state information.

Among them, the evidence information of the traffic event refers to some information used to prove occurrence of the traffic event.

Forms of evidence information corresponding to different traffic events may be different. For example, for illegal parking, evidence information thereof may be one or more frames of images intercepted from the vehicle state information collected by the unmanned vehicle and/or the unmanned aerial vehicle, these images show that the vehicle is parked in a no parking area. For another example, for a road thrown object event, evidence information thereof may be a piece of video intercepted from the road condition information collected by the unmanned vehicle and/or the unmanned aerial vehicle, the video shows that a certain object is falling from a certain vehicle.

After acquiring the evidence information of the traffic event, the evidence information may be used to process the traffic event. For example, it is possible to penalize, educate the vehicle involved in the vehicle violation event; to repair the road surface facility involved in the fault road surface facility event; to determine responsibility for the vehicle involved in the road surface traffic accident event; to track a trajectory of the target vehicle involved in the target vehicle on road event; and so on.

S606: the unmanned vehicle sends the evidence information to a cloud server.

S607: the cloud server re-identifies the evidence information, and obtains precise evidence corresponding to the traffic event.

In this embodiment, the evidence information acquired by the unmanned vehicle may be rough evidence information used to prove a traffic event. Due to limited processing capacity and processing speed of the unmanned vehicle, in the case of the traffic incident being identified by the unmanned vehicle, merely rough evidence information corresponding to the traffic event may be acquired. For example, a longer piece of video containing a traffic event is intercepted (for example, a 1 minute video containing a traffic event is intercepted) from the road condition information and/or the traffic state information, as evidence information.

After the unmanned vehicle sends the evidence information to the cloud server, the cloud server may re-identify the evidence information, to acquire precise evidence corresponding to the traffic event. For example, assuming that the evidence information acquired by the unmanned vehicle is a 1 minute video containing a traffic event, after re-identifying the evidence information, the cloud server may extract a 3-5 seconds video from the evidence information as precise evidence, or extract several frames of images from the evidence information as precise evidence.

It should be understood that the procedure of identifying the evidence information by the cloud server is similar to the procedure of identifying the traffic event by unmanned vehicle, details will not be repeated herein.

S608: the cloud server sends the precise evidence of the traffic event to a displaying device.

S609: the displaying device displays the precise evidence of the traffic event.

Among them, the displaying device may be at least one of the following: a terminal displaying device, a cloud displaying device, a road displaying device. The terminal displaying device may be a displaying device in an unmanned vehicle and/or an unmanned aerial vehicle, may also be a user mobile terminal device. The cloud displaying device may be a cloud large screen for displaying. The road displaying device may be a roadside displaying screen, a roadside electronic stop sign, and so on.

In this embodiment, by a collaborative processing of the unmanned vehicle and the cloud server, monitoring efficiency of a traffic event may be improved, which is suitable for a scenario with a high real time requirement.

It should be noted that the embodiment shown in FIG. 6 is described by taking identification of a traffic event by the unmanned vehicle as an example, in practical applications, the cloud server may also be used to identify a traffic event, the specific implementation are similar, details will not be repeated herein.

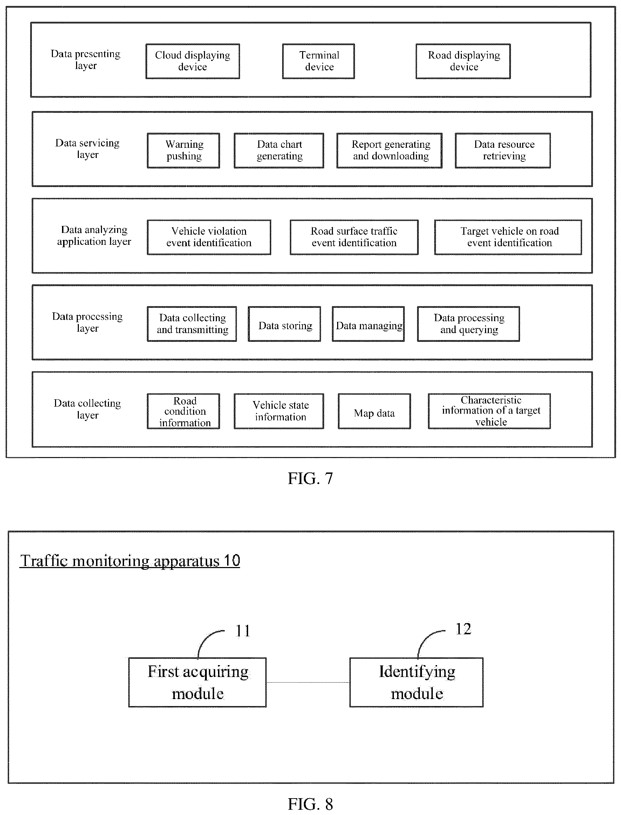

An execution subject of any of the above embodiments is a traffic monitoring device, software architecture of the traffic monitoring device may adopt a layered architecture, a software structure of the traffic monitoring device is exemplary illustrated below with reference to FIG. 7.

FIG. 7 is a block diagram of the software structure of the traffic monitoring device provided by the present application. As shown in FIG. 7, the software architecture of the traffic monitoring device includes several layers, each layer has a clear role and division of labor. One layer communicates with another layer through a software interface.

Referring to FIG. 7, the software architecture may include: a data collecting layer, a data processing layer, a data analyzing application layer, a data servicing layer, and a data presenting layer.

Among them, the data collecting layer may include road condition information and vehicle state information collected by the unmanned vehicle and/or the unmanned aerial vehicle, may also include high-precision map data, positioning data, characteristic information of a target vehicle, and so on. The data collecting layer provides the traffic monitoring device with source data used for identifying a traffic event.

The data processing layer is used to process and store the source data. Specifically, the following processes are performed to the source date: cleaning, unifying data standard, data splitting, and null value processing. After the data is processed, the data may be stored in a distributed cluster.

With increasingly rapid development of big data, an ordinary traditional data storage scheme and database cannot fulfill a big data requirement, in order to better decouple from a business layer, in this embodiment, data collecting and storing are processed separately. In this way, access and processing of new types of data sources may be completed efficiently, without affecting online business processing, achieving efficiently processing of a data coupling problem.

The data analyzing application layer is used to identify a traffic event. Specifically, AI capability is used to process the traffic state information, identify a vehicle violation event, a road surface traffic event, a target vehicle on road event and so on. Different business requirements may be encapsulated into services to provide business output capabilities, which may solve data and business coupling between different services and avoid uncontrollable risks to the system in the future.

The data servicing layer may realize event warning, data resource retrieving, data chart generating, report generating and downloading. The data servicing layer may also provide the identified traffic event to an audit platform for manual verification. After correcting wrong information through the manual verification procedure, the finally confirmed traffic event is presented on a visible terminal, a data report is generated and so on.

In this embodiment, the data servicing layer and the data analyzing application layer are separated, a front-end presenting layer may be separated conveniently and quickly, a problem of tight coupling may be solved.

The data presenting layer is used to present the identified traffic event. Specifically, it may be presented through a cloud displaying device, a terminal displaying device, a road displaying device, and so on. The data presenting layer may provide a function of real-time presentation of the traffic event, may also provide a function of presenting statistical data of historical traffic events.

By adopting a layered management idea, this embodiment perfectly separates the data collecting layer, the data processing layer, the data analyzing application layer, the data servicing layer, the data presenting layer, allowing them to perform their duties, which is beneficial to stability, reliability and convenience of the system, guarantees scalability of the system in terms of function increase, and also facilitates maintenance of the system in the future.

FIG. 8 is a structural schematic diagram of a traffic monitoring apparatus provided by the present application. The traffic monitoring apparatus of this embodiment may be provided in an unmanned vehicle, may also be provided in a cloud server. The traffic monitoring apparatus 10 provided in this embodiment includes a first acquiring module 11 and an identifying module 12.

Among them, the first acquiring module 11 is configured to acquire road condition information and/or vehicle state information collected by a terminal device, the terminal device is at least one of an unmanned vehicle and an unmanned aerial vehicle;
the identifying module 12 is configured to perform a data analysis on the road condition information and/or the vehicle state information, and identify a traffic event.

In a possible implementation, the vehicle state information includes at least one of the following: a vehicle image collected by the unmanned vehicle, a vehicle image collected by the unmanned aerial vehicle, and a vehicle state parameter collected by a sensor of the unmanned vehicle; the identifying module 12 is specifically configured to:
identify a vehicle violation event according to the vehicle state information.

In a possible implementation, the identifying module 12 is further configured to:
identify vehicle number plate information corresponding to the vehicle violation event according to the vehicle image.

In a possible implementation, the identifying module 12 is specifically configured to:
acquire map data from a map server, where the map data includes road section restriction information on a vehicle; and
identify the vehicle violation event according to the road section restriction information on the vehicle and the vehicle state information.

In a possible implementation, the road condition information includes at least one of the following: a road surface image collected by the unmanned vehicle, a road surface image collected by the unmanned aerial vehicle, and road surface facility data collected by a sensor of the unmanned vehicle; the identifying module 12 is specifically configured to:
identify a road surface traffic event according to the road condition information.

In a possible implementation, the identifying module 12 is specifically configured to:
identify a road surface traffic accident event according to the road condition information; and/or,
identify a road surface facility fault event according to the road condition information.

In a possible implementation, the vehicle state information includes at least one of the following: a vehicle image collected by the unmanned vehicle and a vehicle image collected by the unmanned aerial vehicle; the identifying module 12 is specifically configured to:
acquire characteristic information of a target vehicle, where the characteristic information of the target vehicle includes at least one of the following: number plate information and appearance characteristic information;
match and identify the characteristic information of the target vehicle in the vehicle image, identify the target vehicle.

In a possible implementation manner, the identifying module 12 is further configured to:
acquire map data from a map server; and
determine a driving trajectory of the target vehicle according to a location at where the target vehicle appears and the map data.

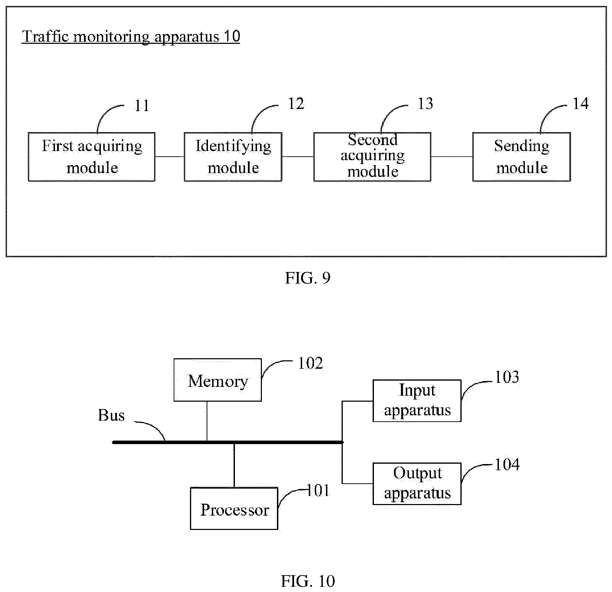

FIG. 9 is a structural schematic diagram of another traffic monitoring apparatus provided by the present application. As shown in FIG. 9, on the basis of the embodiment shown in FIG. 8, the traffic monitoring apparatus 10 further includes:
a second acquiring module 13, configured to acquire evidence information of the traffic event from the road condition information and/or the vehicle state information.

In a possible implementation, the traffic monitoring apparatus 10 further includes:
a sending module 14, configured to send the evidence information of the traffic event to a displaying device, where the displaying device is at least one of the terminal device, a cloud displaying device, and a road displaying device.

The traffic monitoring apparatus provided in this embodiment may be used to perform a technical solution of any of the above method embodiments, implementation principles and technical effects thereof are similar, details will not be repeated herein.

According to an embodiment of the present application, the present application also provides an electronic device and a readable storage medium.

As shown in FIG. 10, it is a block diagram of an electronic device for a traffic monitoring method according to an embodiment of the present application. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. Components, their connections and relationships, and their functions shown herein are merely examples, and are not intended to limit implementation of the present application described and/or required herein.

As shown in FIG. 10, the electronic device includes: one or more processors 101, a memory 102, and interfaces for connecting various components, including a high-speed interface and a low-speed interface. The various components are connected to each other using different buses, and may be installed on a common motherboard or be installed in other ways as required. The processor may process an instruction executed in the electronic device, where the instruction includes an instruction stored in the memory or on the memory to display graphical information of an GUI on an external input/output apparatus (such as a displaying device coupled to an interface). In other implementations, if necessary, multiple processors and/or multiple buses may be used with multiple memories. Likewise, multiple electronic devices may be connected, each device provides part of necessary operations (for example, as a server array, a group of blade servers, or a multi-processor system). In FIG. 10, one processor 101 is taken as an example.

The memory 102 is a non-transitory computer-readable storage medium provided by the present application. Where the memory stores an instruction executable by the at least one processor, to render the at least one processor to execute the traffic monitoring method provided by the present application. The non-transitory computer-readable storage medium of the present application stores a computer instruction, the computer instruction is used to cause the computer to execute the traffic monitoring method provided by the present application.

As a non-transitory computer-readable storage medium, the memory 102 may be used to store a non-transitory software program, a non-transitory computer-executable program, and a module, such as a program instruction/module (for example, the first acquiring module 11, the identifying module 12 shown in FIG. 8, the second acquiring module 13, the sending module 14 shown in FIG. 9) corresponding to the traffic monitoring method in the embodiment of the present application. The processor 101 runs a non-transient software program, an instruction, and a module stored in the memory 102, thereby making it possible to execute various functional applications and data processing of a server, that is, implement the traffic monitoring method in the above method embodiments.

The memory 102 may include a storage program area and a storage data area, where the storage program area may store an operating system, an application program required by at least one function; the storage data area may store data created according to use of the electronic device for the traffic monitoring method and so on. In addition, the memory 102 may include a high-speed random access memory, may also include a non-transitory memory, such as at least one magnetic disk storage device, a flash memory device, or other non-transitory solid-state storage devices. In some embodiments, the memory 102 may optionally include memories remotely provided with respect to the processor 101, these remote memories may be connected to the electronic device for the traffic monitoring method through a network. Examples of the above network include, but are not limited to, an internet, a corporate intranet, a local area network, a mobile communication network, and combinations thereof.

The electronic device for the traffic monitoring method may further include: an input apparatus 103 and an output apparatus 104. The processor 101, the memory 102, the input apparatus 103, and the output apparatus 104 may be connected by a bus or in other ways, in FIG. 10, connection by a bus is taken as an example.

The input apparatus 103 may receive numeric or character information being inputted, and generate key signal input related to user settings and function controlling of the electronic device for the traffic monitoring method, the input apparatus is, for example, a touch screen, a keypad, a mouse, a track pad, a touch pad, a pointing stick, one or more mouse buttons, a trackball, a joystick and so on. The output apparatus 104 may include a displaying device, an auxiliary lighting apparatus (for example, LED), and a tactile feedback apparatus (for example, a vibration motor), and so on. The displaying device may include, but is not limited to, a liquid crystal display (LCD), a light emitting diode (LED) display, and a plasma display. In some embodiments, the displaying device may be a touch screen.

According to an embodiment of the present application, the present application also provides a computer program product including a computer program that, when executed by a processor, causing the processor to execute the method according to any one of the above embodiments.

Various implementations of the system and the technology described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs, the one or more computer programs may be executed and/or interpreted on a programmable system including at least one programmable processor, the programmable processor may be a dedicated or general-purpose programmable processor that may receive data and an instruction from a storage system, at least one input apparatus, and at least one output apparatus, and transmit data and an instruction to the storage system, the at least one input apparatus, and the at least one output apparatus.

These computer programs (also be referred to as programs, software, software applications, or codes) include a machine instruction for a programmable processor, and these computer programs may be implemented by utilizing high-level procedure and/or object-oriented programming languages and/or assembly/machine language. As used herein, the terms "machine-readable medium" and "computer-readable medium" refer to any computer program product, device, and/or apparatus (for example, a magnetic disk, an optical disk, a memory, a programmable logic device (PLD)) used to provide a machine instruction and/or data to a programmable processor, where a machine-readable medium that receive a machine instruction as a machine-readable signal is included. The term "machine-readable signal" refers to any signal used to provide a machine instruction and/or data to a programmable processor.

In order to provide interaction with an user, the system and the technology described herein may be implemented on a computer, the computer is equipped with: a displaying apparatus for displaying information to the user (for example, a CRT (cathode ray tube) or LCD (liquid crystal display) monitor); and a keyboard and a pointing apparatus (for example, a mouse or a trackball) through which the user may provide input to the computer. Other types of apparatuses may also be used to provide interaction with the user; for example, the feedback provided to the user may be sensory feedback of any form (for example, visual feedback, auditory feedback, or tactile feedback); and input from the user may be received in any form (including acoustic input, voice input, or tactile input).

The system and the technology described herein may be implemented in a computing system (for example, as a data server) that includes a back-end component, or a computing system (for example, an application server) that includes a middleware component, or a computing system (for example, a user computer with a graphical user interface or a web browser through which the user may interact with the implementation of the system and the technology described herein) that includes a front-end component, or a computing system that includes any combination of such back-end component, intermediate component, or front-end component. The components of the system may be connected to each other through digital data communication (for example, a communication network) of any form or medium. Examples of the communication network include: a local area network (LAN), a wide area network (WAN), and an internet.

A computer system may include a client and a server. The client and the server are generally far away from each other and usually interact through a communication network. A relationship between the client and the server is generated by computer programs that run on corresponding computers and have a client-server relationship with each other.

## Claims

1. A traffic monitoring method, comprising:
acquiring (S201, S301, S401, S501) vehicle state information collected by a terminal device, wherein the terminal device is at least one of an unmanned vehicle and an unmanned aerial vehicle, and the vehicle state information comprises at least one of the following: a vehicle image collected by the unmanned vehicle and a vehicle image collected by the unmanned aerial vehicle;
acquiring (S502) characteristic information of a target vehicle, wherein the target vehicle comprises a vehicle on road with a specific number plate and/or a specific appearance characteristic that need to be focused on, and the characteristic information of the target vehicle comprises at least one of the following: number plate information and appearance characteristic information;
detecting characteristic information of a first vehicle on a road according to a first vehicle image collected by the unmanned vehicle and/or the unmanned aerial vehicle;
determining the first vehicle as the target vehicle if the characteristic information of the first vehicle matches the characteristic information of the target vehicle, to identify a target vehicle on road event;
acquiring (S504) map data from a map server; and
determining (S504) a driving trajectory of the target vehicle according to a location at where the target vehicle appears and the map data.

2. The method according to claim 1, wherein after the determining the first vehicle as the target vehicle, further comprising:
acquiring (S605) evidence information of the target vehicle on road event from the vehicle state information.

3. The method according to claim 2, wherein after the acquiring (S605) the evidence information of the target vehicle on road event from the vehicle state information, further comprising:
sending the evidence information of the target vehicle on road event to a displaying device, wherein the displaying device is at least one of the terminal device, a cloud displaying device, and a road displaying device.

4. A traffic monitoring apparatus (10), comprising:
a first acquiring module (11), configured to acquire vehicle state information collected by a terminal device, wherein the terminal device is at least one of an unmanned vehicle and an unmanned aerial vehicle, and the vehicle state information comprises at least one of the following: a vehicle image collected by the unmanned vehicle and a vehicle image collected by the unmanned aerial vehicle; and
an identifying module (12), configured to:
acquire characteristic information of a target vehicle, wherein the target vehicle comprises a vehicle on road with a specific number plate and/or a specific appearance characteristic that need to be focused on, and the characteristic information of the target vehicle comprises at least one of the following: number plate information and appearance characteristic information;
detect characteristic information of a first vehicle on a road according to a first vehicle image collected by the unmanned vehicle and/or the unmanned aerial vehicle;
determine the first vehicle as the target vehicle if the characteristic information of the first vehicle matches the characteristic information of the target vehicle, to identify a target vehicle on road event;
acquire map data from a map server; and
determine a driving trajectory of the target vehicle according to a location at where the target vehicle appears and the map data.

5. The apparatus (10) according to claim 4, wherein the apparatus (10) further comprises:
a second acquiring module (13), configured to acquire evidence information of the target vehicle on road event from the vehicle state information.

6. The apparatus (10) according to claim 5, wherein the apparatus (10) further comprises:
a sending module (14), configured to send the evidence information of the target vehicle on road event to a displaying device, wherein the displaying device is at least one of the terminal device, a cloud displaying device, and a road displaying device.

7. A non-transitory computer-readable storage medium storing a computer instruction for causing a computer to execute the method according to any one of claims 1 to 3.

8. A computer program product comprising a computer program that, when executed by a processor, causing the processor to execute the method according to any one of claims 1 to 3.

## Patentansprüche

1. Verkehrsüberwachungsverfahren, umfassend:
Erfassen (S201, S301, S401, S501) von Fahrzeugzustandsinformationen, die von einer Endvorrichtung gesammelt werden, wobei die Endvorrichtung mindestens eines von einem unbemannten Fahrzeug und einem unbemannten Luftfahrzeug ist und die Fahrzeugzustandsinformationen mindestens eines der folgenden umfassen: ein von dem unbemannten Fahrzeug gesammeltes Fahrzeugbild und ein von dem unbemannten Luftfahrzeug gesammeltes Fahrzeugbild;
Erfassen (S502) charakteristischer Informationen eines Zielfahrzeugs, wobei das Zielfahrzeug ein Fahrzeug auf einer Straße mit einem spezifischen Nummernschild und/oder einer spezifischen Erscheinungsbild-Charakteristik umfasst, auf die geachtet werden muss, und die charakteristischen Informationen des Zielfahrzeugs mindestens eines der folgenden umfassen: Nummernschildinformationen und charakteristische Informationen zum Erscheinungsbild;
Erkennen charakteristischer Informationen eines ersten Fahrzeugs auf einer Straße gemäß einem von dem unbemannten Fahrzeug und/oder dem unbemannten Luftfahrzeug gesammelten ersten Fahrzeugbild;
Bestimmen des ersten Fahrzeugs als das Zielfahrzeug, falls die charakteristischen Informationen des ersten Fahrzeugs mit den charakteristischen Informationen des Zielfahrzeugs übereinstimmen, um ein Zielfahrzeug-auf-Straße-Ereignis zu identifizieren;
Erfassen (5504) von Kartendaten von einem Kartenserver; und
Bestimmen (S504) einer Fahrtroute des Zielfahrzeugs gemäß einem Ort, an dem das Zielfahrzeug erscheint, und den Kartendaten.

2. Verfahren nach Anspruch 1, wobei nach dem Bestimmen des ersten Fahrzeugs als das Zielfahrzeug weiter Folgendes umfassend:
Erfassen (S605) von Beweisinformationen des Zielfahrzeug-auf-Straße-Ereignisses aus den Fahrzeugzustandsinformationen.

3. Verfahren nach Anspruch 2, wobei nach dem Erfassen (S605) der Beweisinformationen des Zielfahrzeug-auf-Straße-Ereignisses aus den Fahrzeugzustandsinformationen, weiter Folgendes umfassend:
Senden der Beweisinformationen des Zielfahrzeug-auf-Straße-Ereignisses an eine Anzeigevorrichtung, wobei die Anzeigevorrichtung mindestens eine von der Endvorrichtung, einer Cloud-Anzeigevorrichtung und einer Straßenanzeigevorrichtung ist.

4. Verkehrsüberwachungseinrichtung (10), umfassend:
ein erstes Erfassungsmodul (11), das so konfiguriert ist, dass es von einer Endvorrichtung gesammelte Fahrzeugzustandsinformationen erfasst, wobei die Endvorrichtung mindestens eines von einem unbemannten Fahrzeug und einem unbemannten Luftfahrzeug ist und die Fahrzeugzustandsinformationen mindestens eines der folgenden umfassen: ein von dem unbemannten Fahrzeug gesammeltes Fahrzeugbild und ein von dem unbemannten Luftfahrzeug gesammeltes Fahrzeugbild; und
ein Identifizierungsmodul (12), das konfiguriert ist zum:
Erfassen charakteristischer Informationen eines Zielfahrzeugs, wobei das Zielfahrzeug ein Fahrzeug auf einer Straße mit einem spezifischen Nummernschild und/oder einer spezifischen Erscheinungsbild-Charakteristik umfasst, auf die geachtet werden muss, und die charakteristischen Informationen des Zielfahrzeugs mindestens eines der folgenden umfassen: Nummernschildinformationen und charakteristische Informationen zum Erscheinungsbild;
Erkennen charakteristischer Informationen eines ersten Fahrzeugs auf einer Straße gemäß einem von dem unbemannten Fahrzeug und/oder dem unbemannten Luftfahrzeug gesammelten ersten Fahrzeugbild;
Bestimmen des ersten Fahrzeugs als das Zielfahrzeug, falls die charakteristischen Informationen des ersten Fahrzeugs mit den charakteristischen Informationen des Zielfahrzeugs übereinstimmen, um ein Zielfahrzeug-auf-Straße-Ereignis zu identifizieren;
Erfassen von Kartendaten von einem Kartenserver; und
Bestimmen einer Fahrtroute des Zielfahrzeugs gemäß einem Ort, an dem das Zielfahrzeug erscheint, und den Kartendaten.

5. Einrichtung (10) nach Anspruch 4, wobei die Einrichtung (10) weiter umfasst:
ein zweites Erfassungsmodul (13), das so konfiguriert ist, dass es aus den Fahrzeugzustandsinformationen Beweisinformationen des Zielfahrzeug-auf-Straße-Ereignisses erfasst.

6. Einrichtung (10) nach Anspruch 5, wobei die Einrichtung (10) weiter umfasst:
ein Sendemodul (14), das so konfiguriert ist, dass es die Beweisinformationen des Zielfahrzeug-auf-Straße-Ereignisses an eine Anzeigevorrichtung sendet, wobei die Anzeigevorrichtung mindestens eine von der Endvorrichtung, einer Cloud-Anzeigevorrichtung und einer Straßenanzeigevorrichtung ist.

7. Nichtflüchtiges computerlesbares Speichermedium, das eine Computer-Anweisung speichert, um einen Computer zu veranlassen, das Verfahren nach einem der Ansprüche 1 bis 3 auszuführen.

8. Computerprogrammprodukt, umfassend ein Computerprogramm, das, wenn es von einem Prozessor ausgeführt wird, den Prozessor veranlasst, das Verfahren nach einem der Ansprüche 1 bis 3 auszuführen.

## Revendications

1. Procédé de surveillance de trafic, comprenant les étapes consistant à :
acquérir (S201, S301, S401, S501) des informations d'état de véhicule collectées par un dispositif terminal, dans lequel le dispositif terminal est au moins un parmi un véhicule sans pilote et un véhicule aérien sans pilote, et les informations d'état de véhicule comprennent au moins une parmi les suivantes : une image de véhicule collectée par le véhicule sans pilote et une image de véhicule collectée par le véhicule aérien sans pilote ;
acquérir (S502) des informations de caractéristique d'un véhicule cible, dans lequel le véhicule cible comprend un véhicule sur route avec une plaque d'immatriculation spécifique et/ou une caractéristique d'apparence spécifique sur laquelle il faut se concentrer, et les informations de caractéristique du véhicule cible comprennent au moins une des suivantes : des informations de plaque d'immatriculation et des informations de caractéristique d'apparence ;
détecter des informations de caractéristique d'un premier véhicule sur une route selon une première image de véhicule collectée par le véhicule sans pilote et/ou le véhicule aérien sans pilote ;
déterminer le premier véhicule en tant que véhicule cible si les informations de caractéristique du premier véhicule correspondent aux informations de caractéristique du véhicule cible, pour identifier un véhicule cible lors d'un événement routier ;
acquérir (S504) des données cartographiques à partir d'un serveur de cartes ; et
déterminer (S504) une trajectoire de conduite du véhicule cible en fonction d'un emplacement au niveau duquel le véhicule cible apparaît et des données cartographiques.

2. Procédé selon la revendication 1, dans lequel après la détermination du premier véhicule en tant que véhicule cible, il comprend en outre l'étape consistant à :
acquérir (S605) des informations de preuve de l'événement de véhicule cible sur route à partir des informations d'état de véhicule.

3. Procédé selon la revendication 2, dans lequel après l'acquisition (S605) des informations de preuve de l'événement de véhicule cible sur route à partir des informations d'état de véhicule, il comprend en outre l'étape consistant à :
envoyer les informations de preuve de l'événement de véhicule cible sur route à un dispositif d'affichage, dans lequel le dispositif d'affichage est au moins un parmi le dispositif terminal, un dispositif d'affichage en nuage et/ou un dispositif d'affichage de route.

4. Appareil de surveillance de trafic (10), comprenant :
un premier module d'acquisition (11), configuré pour acquérir des informations d'état de véhicule collectées par un dispositif terminal, dans lequel le dispositif terminal est au moins un parmi un véhicule sans pilote et un véhicule aérien sans pilote, et les informations d'état de véhicule comprennent au moins une parmi les suivantes : une image de véhicule collectée par le véhicule sans pilote et une image de véhicule collectée par le véhicule aérien sans pilote ; et
un module d'identification (12), configuré pour :
acquérir des informations de caractéristique d'un véhicule cible, dans lequel le véhicule cible comprend un véhicule sur route avec une plaque d'immatriculation spécifique et/ou une caractéristique d'apparence spécifique sur laquelle il faut se concentrer, et les informations de caractéristique du véhicule cible comprennent au moins une des suivantes : des informations de plaque d'immatriculation et des informations de caractéristique d'apparence ;
détecter des informations de caractéristique d'un premier véhicule sur une route selon une première image de véhicule collectée par le véhicule sans pilote et/ou le véhicule aérien sans pilote ;
déterminer le premier véhicule en tant que véhicule cible si les informations de caractéristique du premier véhicule correspondent aux informations de caractéristique du véhicule cible, pour identifier un véhicule cible lors d'un événement routier ;
acquérir des données cartographiques à partir d'un serveur de cartes ; et
déterminer une trajectoire de conduite du véhicule cible en fonction d'un emplacement au niveau duquel le véhicule cible apparaît et des données cartographiques.

5. Appareil (10) selon la revendication 4, dans lequel l'appareil (10) comprend en outre :
un second module d'acquisition (13), configuré pour acquérir des informations de preuve de l'événement de véhicule cible sur route à partir des informations d'état de véhicule.

6. Appareil (10) selon la revendication 5, dans lequel l'appareil (10) comprend en outre :
un module d'envoi (14), configuré pour envoyer les informations de preuve de l'événement de véhicule cible sur route à un dispositif d'affichage, dans lequel le dispositif d'affichage est au moins un parmi le dispositif terminal, un dispositif d'affichage en nuage et/ou un dispositif d'affichage de route.

7. Support de stockage non transitoire lisible par ordinateur stockant une instruction informatique pour amener un ordinateur à exécuter le procédé selon l'une quelconque des revendications 1 à 3.

8. Produit de programme informatique comprenant un programme informatique qui, lorsqu'il est exécuté par un processeur, amène le processeur à exécuter le procédé selon l'une quelconque des revendications 1 à 3.
